# EUROPÄISCHE PATENTANMELDUNG

(11) **EP 1 156 565 A2**
(43) Veröffentlichungstag der Anmeldung: **21.11.2001**
(21) Anmeldenummer: 01104078.9
(22) Anmeldetag: 21.02.2001
(51) Int. Cl.: H02B 13/035

(54) **Gasisolierte Schaltanlage mit Vakkuumschaltern**

(30) Priorität: 17.05.2000 DE 10024356
(71) Anmelder: Felten & Guilleaume AG, 51063 Köln (DE)
(72) Erfinder: Mücksch, Dietmar, 02957 Weisskeissel (DE)

(57) **Zusammenfassung**

Bei einer gasisolierten Schaltanlage, insbesondere in dreipoliger Ausführung, sind Vakuumschalter (5,6,7) in einem mit Isoliergas gefüllten Gefäß (1) angeordnet. Die Vakuumschalter sind jeweils über Isolierkörper an der Frontwand (19) des Gefäßes (1) befestigt. Als Isolierkörper für jeden Vakuumschalter (2,3,4) sind zumindest zwei um 180º zueinander versetzt angeordnete, die beiden Stromanschlußträger (14,16) der Vakuumschaltern (2,3,4) aufnehmende Isolierrohre (21,22) vorgesehen, die an der Frontwand (19) befestigte Isolierstangen (23,24) aufnehmen, derart, daß diese in Längsrichtung gegen die Isolierrohre (21,22) bei gleichzeitiger Verspannung der Stromanschlußträger (14,16) verspannt sind. Die Erfindung ist unabhängig von der Spannungsgröße auch bei Schaltanlagen anwendbar, bei denen das Gefäß nur einen oder zwei Vakuumschalter aufnimmt.

## Beschreibung

Die Erfindung betrifft eine gasisolierte Schaltanlage, insbesondere in dreipoliger Ausführung, nach dem Oberbegriff des 1. Patentanspruchs.

In der US 5521567 ist eine gasisolierte Schaltanlage bekannt geworden, in der ein Vakuumschalter mit isolierenden Befestigungselementen an einem Träger angebracht ist. Die Schaltanlage soll aus möglichst wenigen Modulen in erleichtertem Aufbau zusammengesetzt werden können.

Eine weitere, gasisolierte Schaltanlage geht hinsichtlich der Anordnung von Vakuumschaltkammern von als Vakuumschalter ausgebildeten Leistungsschaltern in einem mit Isoliergas gefüllten Gefäß und der Befestigung der Vakuumschaltkammern über Isolierkörper an der Frontwand des Gefäßes aus der DE 4419380 C1 hervor. Dabei kommen als Isolierkörper zwei spiegelsymmetrisch angeordnete, der Aufnahme und Abschirmung der Vakuumschaltkammern dienende Isolierträgereinrichtungen zur Anwendung, die über Schrauben mit der Frontwand, die auch den Schalterantrieb trägt, in Verbindung stehen. Während jede Vakuumschaltkammer zwischen den zugehörigen Isolierträgereinrichtungen im außenliegenden Endbereich durch eine Polkopfeinrichtung radial gelagert ist, erfolgt eine Stützlagerung jeder Vakuumschaltkammer im innenliegenden Endbereich durch eine Polträgereinrichtung. Die Verbindung sowohl der Polkopfeinrichtung als auch der Polträgereinrichtung mit der Isolierträgereinrichtung erfolgt über erste und zweite um einen rechten Winkel geneigt zueinander angeordnete Schraubenlager.

Nachteilig ist bei dieser Befestigung der Vakummschaltkammern an der Frontwand des Gefäßes, daß die Polträgereinrichtung und auch die Polkopfeinrichtung gemeinsam mit den zugehörigen Schraubenlagern einen verhältnismäßig großen Raum in axialer Richtung der Vakuumschaltkammern beanspruchen, der zu einem relativ großen mit Isoliergas gefüllten Gefäß führt, um die Spannungsfestigkeit zwischen der Frontwand des Gefäßes und den Spannungspotential führenden Bauteilen, so beispielsweise dem der Frontwand zunächst liegenden elektrischen Anschluß der Vakuumschaltkammern zu beherrschen. Hinzu kommt, daß der notwendige Raum bedingt durch die Verbindung der Isolierträgereinrichtungen mit der Frontwand über Schrauben noch vergrößert wird, da das Potential der Frontwand durch die Schrauben weiter in das Gefäß verlagert wird. Schließlich führt die Verbindung der Polträgereinrichtung und der Polkopfeinrichtung mit den Isolierträgereinrichtungen über die Schraubenlager zu einem verhältnismäßig großen Aufwand.

Der Erfindung liegt die Aufgabe zugrunde, eine gasisolierte Schaltanlage entsprechend dem Oberbegriff von Anspruch 1 zu schaffen, durch die ausgehend von einem vor dem Einbau in das Gefäß außerhalb des Gefäßes komplett montierten Vakuumschalters durch komplette und raumsparende Befestigung der Vakuumschalter bei gleichzeitiger Verringerung des dazu notwendigen Zeitaufwandes eine weitere Reduzierung ihres umbauten Raumes erreicht wird. Weiterführende Ausgestaltungen sind in den Unteransprüchen formuliert.

Erfindungsgemäß wird dieses dadurch erreicht, daß als Isolierkörper für mindestens einen Vakuumschalter zumindest zwei die beiden Stromanschlußträger eines Vakuumschalters zwischen sich haltende Isolierrohre vorgesehen sind, die an an der Gefäßwand (vorzugsweise an der Frontwand) vorgesehenen Polträgern befestigte Isolierstangen halten, derart, daß diese in Längsrichtung gegen die Isolierrohre bei gleichzeitiger Verspannung der Stromanschlußträger oder nach kraftschlüssiger Verbindung der Stromanschlußträger mit den Isolierrohren mit diesen verspannt sind.

Entscheidend für die Erfindung ist, daß die mechanische Stabilität des Gefässes nicht geschwächt wird, daher zielen die erfinderischen Einzelheiten besonders auf die Erhöhung der mechanischen Steifigkeit hin. Wie noch im weiteren darauf hingewiesen wird, müssen auch Stromkräfte berücksichtigt werden. In den Ausgestaltungen der Erfindung wird also besonderer Wert auf die Erhöhung der mechanischen Festigkeit gelegt.

Als Polträger sind zweckmäßigerweise an der Gefäßwand befestigte Aufnahmeelemente vorhanden, vorzugsweise angeschweißte Buchsen, Gewindehülsen oder Muttern. Dort können die Isolierstangen verstiftet oder eingeschraubt werden. Soll ausgehend von diesen Polträgern eine elastische Verspannung der Isolierstange gegen die Isolierrohre bei gleichzeitiger Verspannung der Stromanschlußträger erreicht werden, so sind gemäß einer vorteilhaften Ausgestaltung der Erfindung die die Isolierstangen aufnehmenden Isolierrohre im Bereich des der Gefäßwand zunächst liegenden Stromanschlußträgers getrennt und nehmen an dieser Trennstelle den auf die Isolierstangen aufsteckbaren Stromanschlußträger zwischen sich auf, während der zweite Stromanschlußträger auf der den Polträgern abgewandten Seite auf die Isolierstangen aufsteckbar ist. Die Verspannung erfolgt hierbei schließlich durch auf die Isolierstangen aufschraubbare Muttern.

Ist jedoch eine kraftschlüssige Verbindung der Stromanschlußträger mit den Isolierrohren vorgesehen, so sind gemäß einer weiteren Ausführung der Erfindung die Stromanschlußträger mit den die Isolierstangen aufnehmenden Isolierrohren durch Kleb- und/oder Schraubverbindungen kraftschlüssig verbunden, wobei zur Verspannung der Isolierstangen gegen die Isolierrohre wieder auf die Isolierstangen aufschraubbare Muttern dienen.

Die Verspannung der Isolierstangen in Längsrichtung gegen die Isolierrohre bei gleichzeitiger Verspannung der Stromanschlußträger kann selbstverständlich auch durch andere analoge Bauelemente erreicht werden. So können die Polträger auch aus an der Gefäßwand angeschweißten Hülsen bestehen, in die die Isolierstangen einsteckbar und durch Bolzen oder Stifte mit diesen verbindbar sind. Ausgehend hiervon kann eine Verspannung erfolgen, indem in eine Bohrung am freien Ende der Isolierstangen ebenfalls Bolzen oder Stifte eingeführt werden, nachdem zuvor auf den dem freien Ende der Isolierstangen zunächst liegenden Stromanschlußträger eine Druckkraft ausgeübt wurde.

Sowohl die Isolierstangen als auch die Isolierrohre sollten vorteilhaft zwecks Gewährleistung einer wärmeabführenden Zirkulation des Isoliergases innerhalb des Gefäßes einen kreisförmigen Querschnitt besitzen.

Wenn es die Stromkräfte der parallel zueinander angeordneten Vakuumschaltern mit ihren Strombahnen erfordern, können die Isolierstangen und die Isolierrohre aber auch mit rechteckförmigen oder ellipsenförmigen Querschnitt - mit Ausnahme des Bereichs, der der Befestigung in den Polträgern dient - ausgebildet sein, womit eine günstige Querschnittsvergrößerung verbunden ist. Dadurch erhöht sich im Zusammenwirken mit der durch die Erfindung vorgenommenen Verspannung die Steifigkeit in Längs- und Querrichtung, so daß nicht nur die auf die Strombahnen wirkende Stromkräfte sondern auch die bei Schaltvorgängen auf die Schaltkontakte wirkenden Kräfte sicher aufgenommen werden.

Um mit einem möglichst geringen Querschnitt bei der Ausbildung der Isolierstangen und Isolierrohre auszukommen, was wieder einen positiven Einfluß auf die wärmeabführende Zirkulation des Isoliergases hat, bestehen sowohl die Isolierrohre als auch die Isolierstangen aus einem Isolierstoff hoher mechanischer Festigkeit, wobei glasfaserverstärktes Epoxidharz zur Anwendung kommen kann.

Zwecks Beschleunigung der wärmeabführenden Zirkulation des Isoliergases besitzen die Stromanschlußträger auf ihrer nach oben zugerichteten Seite mit den Stromanschlußträgern leitend in Verbindung stehende Kühlkörper und/oder weisen die Oberfläche vergrößernde Kühlrippen auf. Mit den Kühlkörpern und/oder Kühlkörpern werden die Stromanschlußträger im Aufbau verstärkt, wodurch eine weitere vorteilhafte Erhöhung der geforderten Verstärkung der mechanischen Steifigkeit eintritt.

Die an der Gefäßwand vorgesehenen Polträger, an denen die Isolierstangen befestigt sind, dienen gleichzeitig zur Versteifung der Gefäßwand gegen den Druck des Isoliergases. Diese Versteifung kann noch erhöht werden, indem die Gefäßwand ein- oder mehrmals abgebogen und/oder mit Sicken versehen ist.

Bei der erfindungsgemäß ausgebildeten gasisolierten Schaltanlage ist weiterhin dem antreibbaren Schaltkontakt jedes Vakuumschalters eine Kontaktkraftfeder sowie eine Polausschaltfeder zugeordnet, die an einem auf der Kontaktstange zwischen der Gefäßwand und dem dieser zunächst liegenden Stromanschlußträger angeordneten Schlagkörper gelagert sind, der auf der der Gefäßwand zugerichteten Seite als Steuerelektrode ausgebildet ist, die das elektrische Feld und somit den Isolationsabstand zwischen der Gefäßwand und dem dieser zunächst liegenden Stromanschlußträger minimiert.

Nach einem weiteren Merkmal der Erfindung wird für eine dreiphasige Schaltanlage, die außerhalb des Gefäßes einen Schalterantrieb trägt, vorgeschlagen, zur Bestätigung der antreibbaren Schaltkontakte der drei Vakuumschalter zwei mit dem Schalterantrieb in Verbindung stehende Schaltstangen in das Gefäß gasdicht hindurchzuführen, von denen die eine Schaltstange isolierend mit der Kontaktstange eines Vakuumschalters und die zweite Schaltstange über einen aus Isolierstoff bestehenden Schaltübertrager mit den Kontaktstangen des zweiten und dritten Vakuumschalters in Verbindung steht. Hierdurch kann Einfluß darauf genommen werden, daß der eine Vakuumschalter vor den beiden anderen Vakuumschaltern schaltet. Die Phase eines Vakuumschalters eilt also den Phasen der beiden anderen Vakuumschaltern voraus, so daß bei einem AUS-Schaltvorgang Überspannungen minimiert werden und somit die Sicherheit der gasisolierten Schaltanlage erhöht wird.

Die Anzahl der in das Gefäß hineingeführten Schaltstangen kann noch weiter reduziert werden, indem nur eine mit dem Schalterantrieb in Verbindung stehende Schaltstange durch die Gefäßwand geführt ist, die über einen aus Isolierstoff bestehenden Schaltübertrager mit den Kontaktstangen der drei Vakuumschalter verbunden ist.

Um auf die durch die Erfindung beabsichtigte Befestigung der Vakuumschalter weiter Einfluß zu nehmen, erfolgt die gasdichte Hineinführung der Schaltstangen in das Gefäß über eine flexible Scheibe (beispielsweise eine Gummischeibe, eine Metallmembran oder ein metallischer Faltenbalg), die einerseits mit den Schaltstangen und andererseits mit der Gefäßwand in Verbindung steht und in axialer Richtung der Vakuumschalter einen geringen Raum beansprucht.

Die Erfindung ist bei gasisolierten Schaltanlagen sowohl auf dem Gebiet der Mittelspannung als auch auf dem Gebiet der Hochspannung anwendbar und kann auch bei derartigen gasisolierten Schaltanlagen eingesetzt werden, bei denen nur ein oder zwei Vakuumschalter innerhalb des mit Isoliergas gefüllten Gefäßes angeordnet sind. Die durch die Erfindung beabsichtigten Wirkungen werden auch dann erzielt, wenn an Stelle von zwei um 180° zueinander versetzt angeordneten Isolierrohren mit den zugehörigen Isolierstangen beispielsweise eine Anordnung von vier Isolierrohren, beispielsweise um 90° zueinander versetzt, mit den dazu gehörenden Isolierstangen eingesetzt wird.

Die Erfindung wird anhand von zwei Ausführungsbeispielen näher erläutert. Die zugehörigen Zeichnungen zeigen:
Figur 1 die Draufsicht auf ein mit Isoliergas gefülltes Gefäß einer gasisolierten Schaltanlage mit drei Vakuumschaltern,
Figur 2 die Seitenansicht eines Vakuumschalters gemäß der Anordnung nach Figur 1,
Figur 3 eine Ausführungsvariante für die Befestigung der Vakuumschalter nach Figur 1 und 2 an der Frontwand des Gefäßes,
Figur 4 eine weitere Ausführungsvariante für die Befestigung der Vakuumschalter,
Figur 5 eine schematische Darstellung der Verbindung der Kontaktstangen der drei Vakuumschalter nach Figur 1 mit den Schaltstangen und
Figur 6 eine schematische Darstellung einer weiteren Variante der Verbindung der Kontaktstangen mit dem Schalterantrieb.

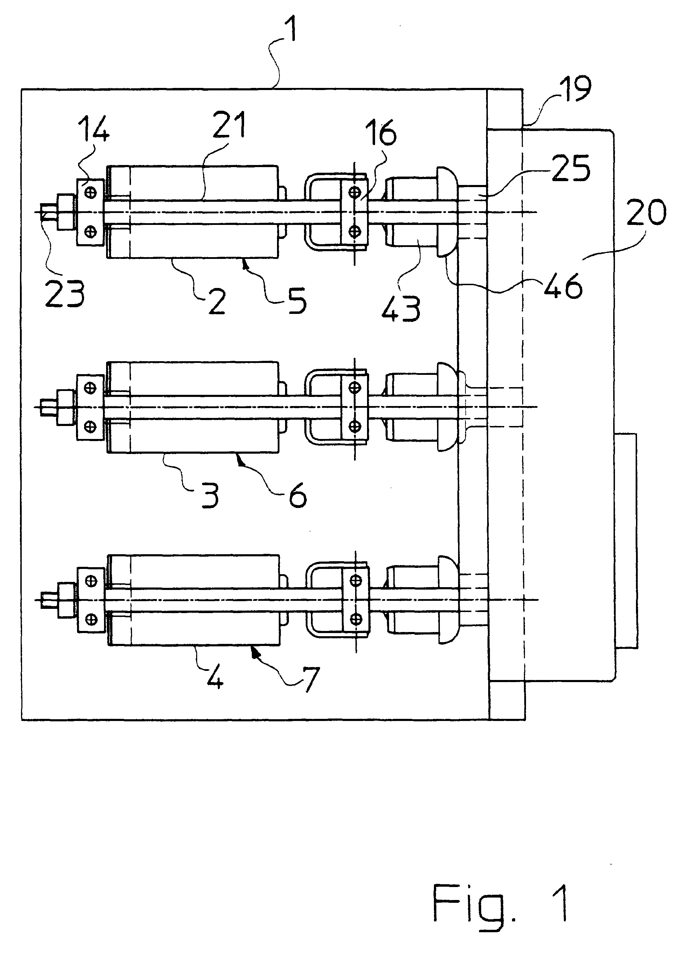

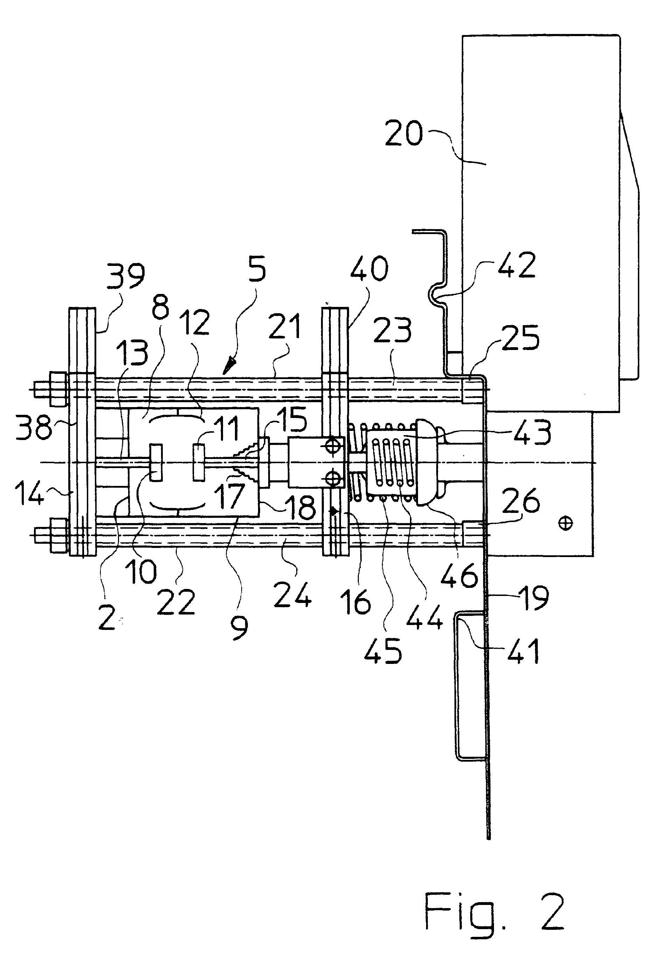

Gemäß Figur 1 sind mit Blick von oben in einem mit Isoliergas gefüllten Gefäß 1 einer gasisolierten Schaltanlage drei in einer horizontalen Linie nebeneinander angeordnete, als Vakuumschalter 5,6,7 ausgebildete Leistungsschalter vorgesehen. Die Vakuumschaltkammern 2, 3, 4, deren wesentliche Bestandteile Vakuumschaltröhren sind, nehmen, wie insbesondere aus Figur 2 hervorgeht, in ihrem Vakuumraum 8, der im wesentlichen durch den Isolierzylinder 9 begrenzt ist, sowohl den feststehenden Schaltkontakt 10 als auch den antreibbaren Schaltkontakt 11 auf und haben im Bereich der Schaltkontakte 10,11 einen Kondensatschirm 12. Während der feststehende Schaltkontakt 10 über die Kontaktstange 13 mit dem Stromanschlußträger 14 galvanisch in Verbindung steht, steht der antreibbare Schaltkontakt 11 über die Kontaktstange 15 unter Zwischenschaltung nicht weiter dargestellter Kontaktelemente mit einem zweiten Stromanschlußträger 16 in Verbindung. Dabei ist die Kontaktstange 15 gasdicht durch einen Faltenbalg 17 durch die ebenfalls den Vakuumraum 8 begrenzende Armierung 18 hindurchgeführt.

Aus den Figuren 1 und 2 ist weiterhin ersichtlich, daß die Vakuumschaltkammern 2,3,4 an der Frontwand 19 des Gefäßes 1 befestigt sind, die außerhalb des Gefäßes 1 den Schalterantrieb 20 trägt. Zur Befestigung der Vakuumschaltkammern 2,3,4 an der Frontwand 19 sind zwei parallel zur Hauptachse der Vakuumschalter verlaufende und um 180° zueinander versetzt angeordnete, die Stromanschlußträger 14, 16 aufnehmende Isolierrohre 21, 22 vorgesehen, die ihrerseits Isolierstangen 23, 24 aufnehmen, die an an der Frontwand 19 vorgesehenen Polträgern 25, 26 befestigt sind. Jede Isolierstange (23, 24) verläuft im Innern einer der Isolierrohre (21, 22). Die Isolierstangen weisen an jedem Ende ein Gewinde auf. Die Aufnahme der Isolierstangen 23, 24 durch die Isolierrohre 21, 22 erfolgt derart, daß die Isolierstangen 23, 24 in Längsrichtung gegen die Isolierrohre 21, 22 bei gleichzeitiger Verspannung der Stromanschlußträger 14, 16 oder nach kraftschlüssiger Verbindung der Stromanschlußträger 14, 16 mit den Isolierrohren 21, 22 mit diesen verspannt sind.

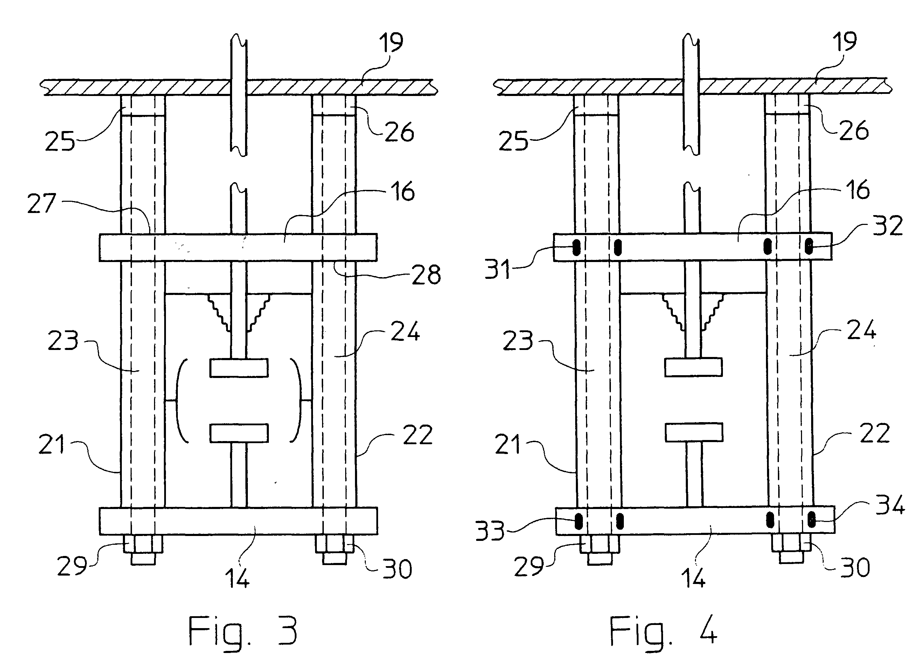

Um eine Verspannung der Isolierstangen 23,24 gegen die Isolierrohre 21,22 bei gleichzeitiger Verspannung der Stromanschlußträger 14,16 zu erreichen, besitzen die Isolierrohre 21,22, wie aus Figur 3 hervorgeht, im Bereich des Stromanschlußträgers 16 eine Trennstelle 27,28 und nehmen an dieser den auf die Isolierstangen 23,24 aufsteckbaren Stromanschlußträger 16 zwischen sich auf. Nachdem auch der Stromanschlußträger 14 auf die Isolierstangen 23, 24 aufgesteckt ist, erfolgt die Verspannung der Isolierstangen 23,24 gegen die Isolierrohre 21, 22 bei gleichzeitiger Verspannung der Stromanschlußträger 14,16 durch auf die Isolierstangen 23, 24 aufschraubbare Muttern 29,30. Zur Befestigung der Isolierstangen 23,24 an der Frontwand 19 kommen bei dieser Ausbildung als Polträger 25,26 an der Frontwand 19 angeschweißte Gewindehülsen zur Anwendung, in die die Isolierstangen 23,24 eingeschraubt sind.

Gemäß Figur 4 erfolgt eine elastische Verspannung der Isolierstangen 23,24 gegen die Isolierrohre 21, 22 zuvor ebenfalls durch auf die Isolierstangen 23,24 aufschraubbare Muttern 29,30. Im Gegensatz zu der Ausführung nach Figur 3 sind hier jedoch die Stromanschlußträger 14, 16 mit den Isolierrohren 21, 22 durch Klebverbindungen 31,32 und 33,34 kraftschlüssig verbunden. Die Befestigung der Isolierstangen 23,24 an der Frontwand 19 erfolgt hierbei ebenfalls durch Polträger 25,26, die als an der Frontwand 19 angeschweißte Gewindehülsen ausgebildet sind, in die die Isolierstangen 23,24 eingeschraubt sind.

Aus der Figur 2 ist auch ersichtlich, daß die Stromanschlußträger 14,16 einerseits mit Kühlrippen 38 versehen sind und andererseits leitend mit den Stromanschlußträgern 14,16 in Verbindung stehende Kühlkörper 39,40 haben, die der Beschleunigung der wärmeabführenden Zirkulation des Isoliergases dienen.

Schließlich gent aus Figur 2 aucn noch hervor, daß die Frontwand 19 des Gefäßes 1 Abbiegungen 41 und Sicken 42 besitzt, durch die eine Versteifung der Frontwand 19 erreicht wird und daß - siehe auch Fig. 1 - zwischen dem Stromanschlußträger 16 eines jeden Vakuumschalters 5,6,7 und der Frontwand 19 jeweils ein Schlagkörper 43 gelagert ist, der sowohl die Kontaktkraftfeder 44 als auch die Polauschaltfeder 45 aufnimmt und auf der der Frontwand 19 zugerichteten Seite als Steuerelektrode 46 ausgebildet ist. Dabei wird durch die Steuerelektrode 46 der Isolationsabstand zwischen der Frontwand 19 und dem Stromanschlußträger 16 minimiert.

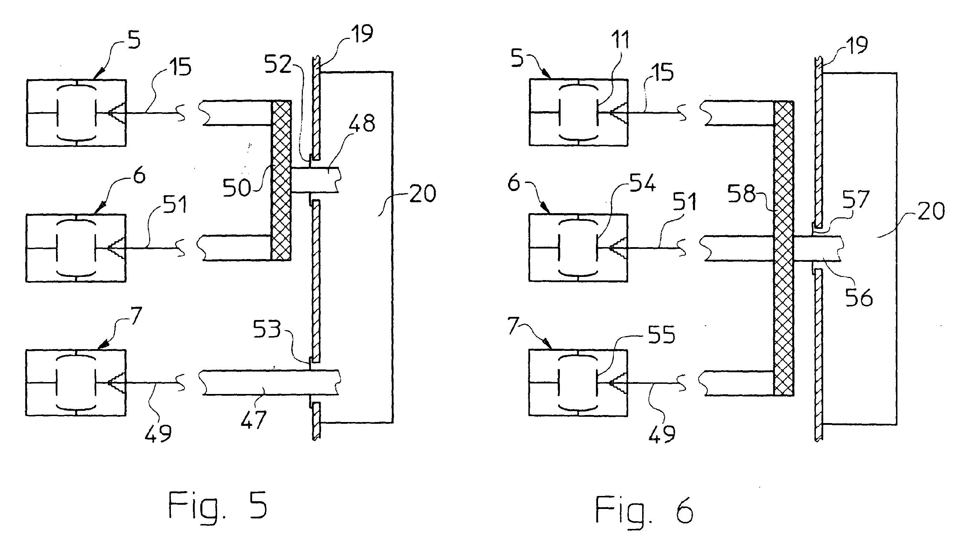

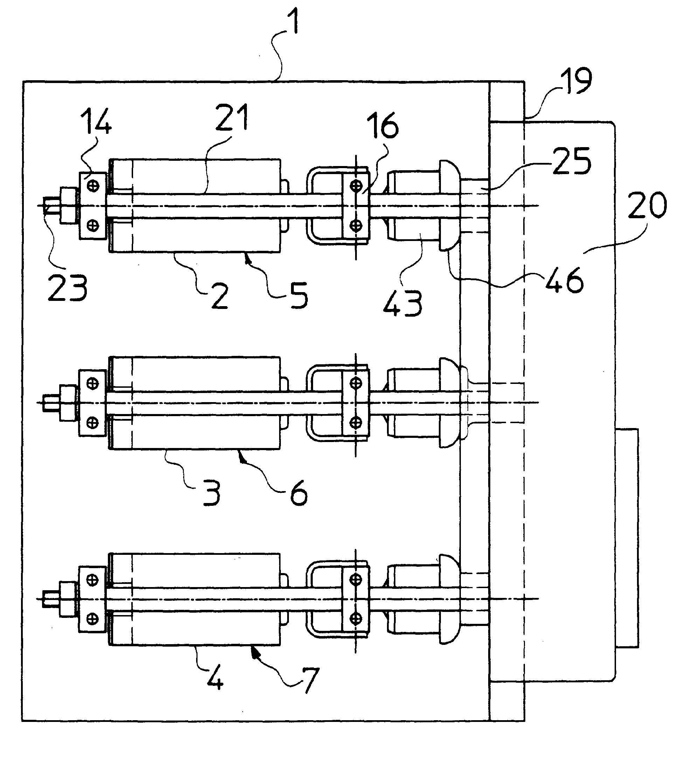

Aus Figur 5 ist ersichtlich, daß bei einer Schaltanlage mit drei Vakuumschaltern 5,6,7 gemäß Figur 1 nur zwei Schaltstangen 47,48, die mit dem Schalterantrieb 20 in Verbindung stehen, durch die Frontwand 19 gasdicht hindurchgeführt sind. Dabei steht die eine Schaltstange 47 isolierend mit der Kontaktstange 49 des Vakuumschalters 7 und die andere Schaltstange 48 über einen aus Isolierstoff bestehenden Schaltübertrager 50 mit den Kontaktstangen 15,51 der Vakuumschalter 5,6 in Verbindung. Die gasdichte Hindurchführung der Schaltstangen 47,48 durch die Frontwand 19 wird durch Gummischeiben 52,53 ermöglicht, die einerseits mit den Schaltstangen 47,48 und andererseits mit der Frontwand 19 verbunden sind.

Gemäß Figur 6 wird ausgehend von drei Vakuumschaltern 5,6,7 zur Betätigung der antreibbaren Schaltkontakte 11,54,55 der Vakuumschalter 5,6,7 nur noch eine mit dem Schalterantrieb 20 in Wirkverbindung stehende Schaltstange 56 benötigt. Nach ihrer gasdichten Hindurchführung durch die Frontwand 19, wobei wieder eine Gummischeibe 57 zur Anwendung kommt, steht die Schaltstange 56 über einen aus Isolierstoff bestehenden Schaltübertrager 58 mit jeder der Kontaktstangen 15,49,51 in Verbindung.

### Bezugszeichenliste

- 1: Gefäß
- 2,3,4: Vakuumschaltkammern
- 5,6,7: Vakuumschalter
- 8: Vakuumraum
- 9: Isolierzylinder
- 10: feststehender Schaltkontakt
- 11,54,55: antreibbarer Schaltkontakt
- 12: Kondensatschirm
- 13,15,49,51: Kontaktstangen
- 14,16: Stromanschlußträger
- 17: Faltenbalg
- 18: Armierung
- 19: Frontwand
- 20: Schalterantrieb
- 21,22: Isolierrohre
- 23,24: Isolierstangen
- 25,26: Polträger
- 27,28: Trennstellen
- 29,30: Muttern
- 31,32,33,34: Klebeverbindungen
- 38: Kühlrippen
- 39,40: Kühlkörper
- 41: Abbiegungen
- 42: Sicken
- 43: Schlagkörper
- 44: Kontaktkraftfeder
- 45: Polausschaltfeder
- 46: Steuerelektrode
- 47,48,56: Schaltstangen
- 50,58: Schaltübertrager
- 52,53,57: Gummischeiben

## Patentansprüche

1. Gasisolierte Schaltanlage, insbesondere in dreipoliger Ausführung, bei der in einem mit Isoliergas gefüllten Gefäß (1) Vakuumschalter (5,6,7) für mindestens eine Phase angeordnet sind, wobei die Vakuumschalter (5,6,7) jeweils über Isolierkörper (21,22,23,24) an einer Wand (19) des Gefäßes (1) befestigt sind, **dadurch gekennzeichnet, daß** als Isolierkörper (21,22,23,24) für jeden Vakuumschalter (5,6,7) zumindest zwei die beiden Stromanschlußträger (14,16) eines Vakuumschalters (5,6,7) zwischen sich haltende Isolierrohre (21, 22) vorgesehen sind, die an an der Gefäßwand (19) vorgesehenen Polträgern (25, 26) befestigte Isolierstangen (23,24) halten, derart, daß diese in Längsrichtung gegen die Isolierrohre (21,22) bei gleichzeitiger Verspannung der Stromanschlußträger (14, 16) oder nach kraftschlüssiger Verbindung der Stromanschlußträger (14, 16) mit den Isolierrohren (21, 22) mit diesen verspannt sind.

2. Schaltanlage nach Anspruch 1, **dadurch gekennzeichnet, daß** die Polträger (25,26) aus an der Gefäßwand (19) befestigten Aufnahmeelementen bestehen, an die die Isolierstangen (23,24) befestigt werden.

3. Schaltanlage nach Anspruch 2, **dadurch gekennzeichnet, daß** die die Isolierstangen (23, 24) aufnehmenden Isolierrohre (21,22) im Bereich des der Gefäßwand (19) zunächst liegenden Stromanschlußträgers (16) getrennt sind und an dieser Trennstelle (27, 28) den auf die Isolierstangen (23,24) aufsteckbaren Stromanschlußträger (16) zwischen sich halten, während der zweite Stromanschlußträger (14) auf der den Polträgern (25, 26) abgewandten Seite auf die Isolierstangen (23,24) aufsteckbar ist und zur Verspannung der Isolierstangen (23,24) gegen die Isolierrohre (21,22) bei gleichzeitiger Verspannung der Stromanschlußträger (14,16) auf die Isolierstangen (23,24) anschraubbare Muttern (29,30) vorgesehen sind.

4. Schaltanlagen nach Anspruch 2, **dadurch gekennzeichnet, daß** die Stromanschlußträger (14,16) mit den die Isolierstangen (23,24) aufnehmenden Isolierrohren (21, 22) durch Kleb- und oder Schraubverbindungen (31,32,33,34) kraftschlüssig verbunden sind und daß zur Verspannung der Isolierstangen (23,24) gegen die Isolierrohre (21,22) auf die Isolierstangen (23,24) aufschraubbare Muttern (29,30) vorgesehen sind.

5. Schaltanlage nach Anspruch 3 oder 4, **dadurch gekennzeichnet, daß** sowohl die Isolierstangen (23,24) als auch die Isolierrohre (21,22) einen kreisförmigen, einen viereckförmigen oder einen elliptischen Querschnitt aufweisen.

6. Schaltanlage nach Anspruch 4 oder 5, **dadurch gekennzeichnet, daß** sowohl die Isolierrohre (21,22) als auch die Isolierstangen (23,24) aus einem Isolierstoff hoher mechanischer Festigkeit bestehen.

7. Schaltanlage nach einem der vorhergehenden Ansprüche, **dadurch gekennzeichnet, daß** die Stromanschlußträger (14,16) auf ihrer nach oben zugerichteten Seite mit den Stromanschlußträgern (14,16) leitend in Verbindung stehende Kühlkörper (39, 40) haben und/oder die Oberfläche vergrößernde Kühlrippen (38) aufweisen.

8. Schaltanlage nach einem der vorhergehenden Ansprüche, **dadurch gekennzeichnet, daß** die Gefäßwand (19) mindestens einmal abgebogen ist und/oder mit Sicken (42) versehen ist.

9. Schaltanlage nach einem der vorhergehenden Ansprüche, **dadurch gekennzeichnet, daß** dem antreibbaren Schaltkontakt (11,54,55) eines jeden Vakuumschalters (5,6,7) eine Kontaktkraftfeder (44) sowie eine Polausschaltfeder (45) zugeordnet ist, die an einem auf der Kontaktstange (15) zwischen der Gefäßwand (19) und dem dieser zunächst liegenden Stromanschlußträger (16) angeordneten Schlagkörper (43) gelagert sind, der auf der der Gefäßwand (19) zugerichteten Seite als Steuerelektrode (46) ausgebildet ist.

10. Schaltanlage nach einem der vorhergehenden Ansprüche, **dadurch gekennzeichnet, daß** die Schaltanlage dreiphasig ausgebildet ist und außerhalb des Gefäßes (1) einen Schalterantrieb (20) trägt und daß zur Betätigung der antreibbaren Schaltkontakte (11,54,55) der drei Vakuumschalter (5,6,7) zwei mit dem Schalterantrieb (20) in Verbindung stehende Schaltstangen (47,48) durch die Gefäßwand (19) gasdicht geführt sind, von denen die eine Schaltstange (47) isolierend mit der Kontaktstange (49) eines Vakuumschalters (7) und die zweite Schaltstange (48) über einen aus Isolierstoff bestehenden Schaltübertrager (50) mit den Kontaktstangen (15,51) des zweiten (5) und dritten (6) Vakuumschalters in Verbindung steht.

11. Schaltanlage nach einem der Ansprüche 1 bis 9, **dadurch gekennzeichnet, daß** die Schaltanlage dreiphasig ausgebildet ist und außerhalb des Gefäßes (1) einen Schalterantrieb (20) trägt und daß zur Betätigung der antreibbaren Schaltkontakte (11,54,55) der drei Vakuumschalter (5,6,7) eine mit dem Schalterantrieb (20) in Verbindung stehende Schaltstange (51) durch die Gefäßwand (19) gasdicht geführt ist, die über einen aus Isolierstoff bestehenden Schaltübertrager (58) mit den Kontaktstangen (15,49,51) der Vakuumschalter (5, 6, 7) verbunden ist.
